# Europäisches Patentamt
# European Patent Office
# Office européen des brevets

(11) Numéro de publication: **0 065 799**
**B1**

(12) **FASCICULE DE BREVET EUROPEEN**

(45) Date de publication du fascicule du brevet: **16.03.88**

(51) Int. Cl.⁴: **F 16 L 58/10,** **E 03 F 3/04,** **E 21 D 11/10**

(21) Numéro de dépôt: **82200556.7**

(22) Date de dépôt: **07.05.82**

(54) **Dispositif pour le recouvrement de parois en béton comprenant une feuille de matière plastique.**

(30) Priorité: **18.05.81 FR 8109998**

(43) Date de publication de la demande:
**01.12.82 Bulletin 82/48**

(45) Mention de la délivrance du brevet:
**16.03.88 Bulletin 88/11**

(84) Etats contractants désignés:
**AT BE CH DE FR GB IT LI LU NL SE**

(56) Documents cités:
**BE-A- 699 661**
**FR-A-2 224 697**
**FR-A-2 421 325**
**GB-A-1 413 397**
**US-A-1 876 205**

(73) Titulaire: **DRAKA POLVA B.V.**
**Vlaardingenlaan 11**
**NL-1062 HM Amsterdam (NL)**

(72) Inventeur: **Acda, Petrus Marinus**
**Vrijdom, 13**
**Enkhuizen (NL)**

(74) Mandataire: **Bouchoms, Maurice et al**
**Solvay & Cie Département de la propriété**
**industrielle 310, rue de Ransbeek**
**B-1120 Bruxelles (BE)**

Courier Press, Leamington Spa, England.

EP 0 065 799 B1

**Description**

La présente invention concerne un dispositif pour le recouvrement de parois en béton et plus particulièrement de parois d'ouvrages déjà construits, comprenant une feuille de matière plastique comportant des éléments d'accrochage sur sa face en regard de la paroi.

Il est actuellement de pratique courante de protéger des parois en béton par exemple contre l'action de milieux corrosifs en recouvrant celles-ci par au moins une feuille constituée d'une matière plastique choisie en fonction de la nature du milieu corrosif.

Ainsi, lors de la réalisation de canalisations d'égouts en béton, il est souhaitable de protéger la paroi interne de ces canalisations contre l'action corrosive exercée par les eaux usées et par les gaz dégagés par celles-ci. Lorsqu'une telle précaution n'est pas prise au départ; on constate généralement que la paroi interne des canalisations se dégrade rapidement et nécessite des réparations souvent coûteuses. Il en va de même pour des parois d'autres types d'ouvrages en béton tels que des tunnels, des citernes, des cuves de stations d'épuration d'eau, etc.

Une technique connue pour protéger de telles parois consiste à revêtir celle-ci d'une feuille de matière plastique de nature appropriée.

Ainsi, dans un article publié aux pages 102 et 103 du numéro de janvier 1952 de la revue "Modern Plastics" de même que dans le document FR—A—2224697, on divulgue des feuilles plastiques qui présentent sur une de leurs faces des nervures parallèles de section en T venues d'extrusion et exploitables pour ancrer ces feuilles à des parois internes de canalisations en béton utilisables notamment pour la réalisation d'égoûts. Un tel matériau se révèle efficace comme moyen de protection contre la corrosion et est relativement facile à mettre en oeuvre lors de la confection des canalisations, la feuille étant ancrée à la paroi interne des sections de canalisation lors de leur construction. Par contre, ce matériau se révèle d'une utilisation beaucoup moins avantageuse lorsqu'on désire l'employer pour protéger des canalisations déjà construites ou pour les restaurer. Dans un tel cas, en effet, la feuille doit être cintrée, au profil interne de la canalisation et être fixée par un mortier de béton introduit entre la feuille et la paroi de la canalisation, de façon à l'ancrer grâce à ses nervures en T à la paroi, tandis que la feuille est maintenue par un coffrage interne provisoire jusqu'à la fin de la prise du mortier. Compte tenu du fait que la feuille doit pouvoir être aisément cintrée, il convient que celle-ci soit réalisée en un matériau plastique relativement flexible et dès lors, les nervures en T dont elle est pourvue sont également flexibles ce qui nuit à un bon ancrage de la feuille. De plus, les nervures en T équipant la feuille ont généralement des hauteurs identiques ce qui peut entraîner certaines difficultés de centrage du recouvrement lorsque la paroi interne à protéger est corrodée de façon inégale et présente de ce fait une surface irrégulière.

La présente invention vise dès lors à procurer un dispositif pour le recouvrement de parois en bétons comprenant une feuille de matière plastique comportant des éléments d'accrochage sur sa face au regard de la paroi qui ne présente pas les inconvénients des matériaux connus et qui se révèle particulièrement avantageux pour protéger ou restaurer des parois en béton d'ouvrages déjà construits.

Selon l'invention, le dispositif comprend une feuille de matière plastique comportant des éléments d'accrochage sur sa face en regard de la paroi et des éléments de fixation en matière rigide de forme générale en T et pouvant avoir des hauteurs différentes dont la semelle est ancrée à la paroi à recouvrir par un mortier de béton coulé entre la feuille et la paroi et dont l'âme est équipée à son extrémité d'un élément de liaison par encastrement coopérant avec les éléments d'accrochage de la feuille.

Les feuilles de matière plastique peuvent être réalisées en un matériau quelconque choisi en fonction de sa résistance à l'environnement. De préférence, on choisit une matière plastique semi-rigide ou souple de façon à obtenir des feuilles aisément cintrables. L'épaisseur de ces feuilles varie, en général elle est de un à quelques millimètres.

Dans le dispositif selon l'invention, les éléments d'accrochage prévus sur une face des feuilles peuvent être de conformations diverses. Ainsi, ceux-ci peuvent être ponctuels et être constitués par des excroissances, par exemple en forme de champignons ou de crochets, réparties en quinconce ou en quadrillage sur la surface d'une face de la feuille. En général, et pour des raisons de facilité d'exécution, on préfère toutefois que ces éléments d'accrochage se présentent sous la forme de nervures ou de rainures parallèles de section générale en forme de T ou de coin. Ces nervures ou rainures peuvent faire partie intégrante de la feuille et être par exemple réalisées directement lors de la production des feuilles par extrusion. Selon un autre mode de réalisation, ces nervures ou rainures peuvent être constituées par des profilés de matière plastique rapportés sur des feuilles planes, par exemple par collage ou par soudage. Dans ce dernier cas, on préfère que les profilés constituant les nervures ou rainures soient réalisés par extrusion à partir d'une matière plastique rigide. La hauteur des nervures ou rainures peut être relativement faible, et, en général, le rapport entre cette hauteur et l'épaisseur des feuilles est comprises entre 1/2 et 3. De préférence, les nervures ou rainures sont identiques en ce qui concerne leur forme et leurs dimensions.

Les éléments de fixation des dispositifs selon l'invention qui sont, de préférence, des profilés réalisés en une matière rigide peuvent être produits à partir de matières plastiques par moulage par injection, ou de préférence par extrusion en utilisant une filière de forme appropriée.

L'élément de liaison par encastrement prévu sur l'extrémité de l'âme des éléments de centrage peut être de conformations diverses choisies pour qu'il puisse coopérer avec les éléments d'accrochage prévus sur les feuilles et ainsi assurer la fixation de ces dernières.

Ainsi, dans le cas de feuilles équipées d'excroissances ponctuelles en forme de champignons, l'élément de liaison par encastrement peut se présenter sous la forme d'une rainure dont le profil correspond à celui de la section des excroissances et dont les bords externes rapportés peuvent être écartés provisoirement par pression de façon à permettre l'encastrement des excroissances dans la rainure. Il en va de même lorsque les feuilles sont équipées de nervures d'accrochage de section générale en T et, dans ce cas, la rainure prévue sur l'extrémité de l'âme de l'élément de fixation présente un profil correspondant à celui de la nervure. Enfin, dans le cas de feuilles équipées de rainures d'accrochage, l'élément de liaison par encastrement se présente sous forme d'une nervure dont le profil correspond à celui des rainures. Dans tous les cas, l'élément de liaison ou l'élément d'accrochage comporte de préférence des arêtes de blocage assurant l'encastrement définitif de ces éléments lorsque ceux-ci sont insérés de force l'un dans l'autre.

Les éléments de fixation peuvent avoir une longueur quelconque mais, pour que leur placement soit plus facile, on préfère que cette longueur soit comprise entre 5 et 50 cm. La hauteur de l'âme peut également varier dans de larges limites par exemple entre 3 et 25 cm et plus généralement entre 3 et 10 cm. Il est loisible d'utiliser pour la fixation d'une même feuille, des éléments de fixation ayant des hauteurs d'âme différentes, ce qui permet de centrer correctement le recouvrement interne lors de sa mise en place même lorsque la paroi à protéger présente des inégalitiés dues par exemple à des corrosions locales.

Les éléments de fixation du dispositif selon l'invention peuvent dès lors exercer deux fonctions: assurer l'ancrage des feuilles à la paroi de béton grâce à leur semelle et à leur élément de liaison et assurer le positionnement correct de la feuille lors de sa mise en place par une variation de la hauteur de leur âme.

Les feuilles de matière plastique peuvent être produites à partir de diverses matières plastiques d'usage largement répandu telles que les polymères et copolymères d'oléfines éventuellement modifiés (les polyéthylènes chlorés par exemple) et les élastomères à caractère thermoplastique (les copolymères butadiène-styrène et butadiène-acrylonitrile par exemple). Les éléments de fixation peuvent également être réalisés dans des matières, de préférence rigides, de natures très diverses tels que des métaux comme l'aluminium. De préférence, cependant, les éléments de fixation sont également réalisés dans des matières plastiques d'usage largement répandu telles que les polyoléfines, le polystyrène, et les résines acryliques. On préfère toutefois réaliser aussi bien les feuilles que les éléments de fixation à partir de résines dérivées du chlorure de vinyle. Ainsi, il se révèle avantageux de réaliser les feuilles en une résine à base de polychlorure de vinyle contenant des plastifiants en proportion suffisante pour obtenir des feuilles flexibles aisément cintrables et de réaliser les éléments de fixation à partir de polychlorure de vinyle rigide, c'est-à-dire ne contenant que peu ou pas de plastifiant.

Lors du montage du dispositif selon l'invention, les feuilles sont équipées des éléments de fixation, choisis avec les hauteurs d'âmes adéquates et répartis avec une fréquence qui peut être prédéterminée à volonté, ces éléments étant encastrés dans les éléments d'accrochages prévus sur les feuilles. Les feuilles sont ensuite cintrées et maintenues en place contre la paroi de la canalisation par un coffrage interne provisoire, les semelles des éléments de fixation étant en contact direct avec la paroi de béton. L'ancrage est alors obtenu à l'intervention d'un mortier de béton coulé entre les feuilles et la paroi interne et, après prise de ce mortier, on peut retirer le coffrage. L'étanchéité entre des feuilles voisines peut être assurée par tout moyen connu tel que le recours à des joints ou à des cordons d'étanchéité ou par recouvrement avec collage et soudage.

Le dispositif selon l'invention est en outre explicité plus en détail dans la description qui va suivre de certains modes de réalisation pratique donnés à titre illustratif. Dans cette description, on se référera aux figures des dessins annexés dans lesquelles:

la *figure 1* est une vue partielle en coupe d'une canalisation en béton montrant en premier mode de réalisation pratique de l'invention

la *figure 2* est une vue partielle en coupe d'une canalisation en béton montrant un autre mode de réalisation

la *figure 3* est une vue en perspective d'une section d'un dispositif selon l'invention

la *figure 4* est une vue en coupe partielle d'une section de canalisation en béton équipée d'un dispositif selon l'invention durant la prise du mortier de béton assurant sa fixation définitive.

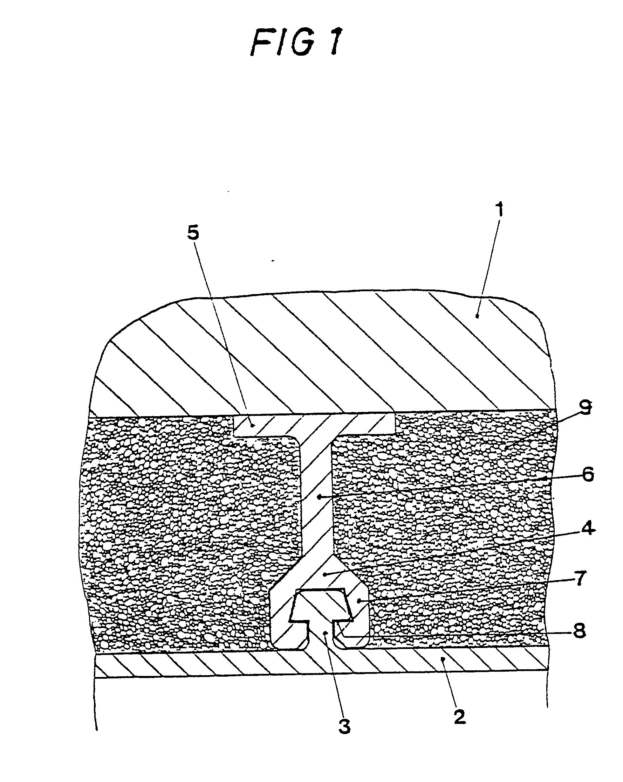

Ainsi qu'il apparaît sur la figure 1, le recouvrement de la paroi en béton 1 est assuré par une feuille en matière plastique 2 comportant des éléments d'accrochage constitués par des nervures de section en T 3 venues d'extrusion et par des éléments de fixation 4 de forme générale en T comportant une semelle 5 et une âme 6 dont l'extrémité est équipée d'un élément de liaison 7 constitué d'une rainure de section en T correspondant à la forme de la nervure 3 de la feuille 2 et dans laquelle cette nervure peut être encastrée par pression et maintenu par les arêtes de blocage 8.

Le dispositif ainsi constitué est maintenu en place et ancré à la paroi 1 par un mortier de béton 9 coulé entre la feuille 2 et la paroi de béton 1, ce mortier assurant l'ancrage définitif des éléments de fixation 4 notamment par l'intermédiaire de leur semelle 5.

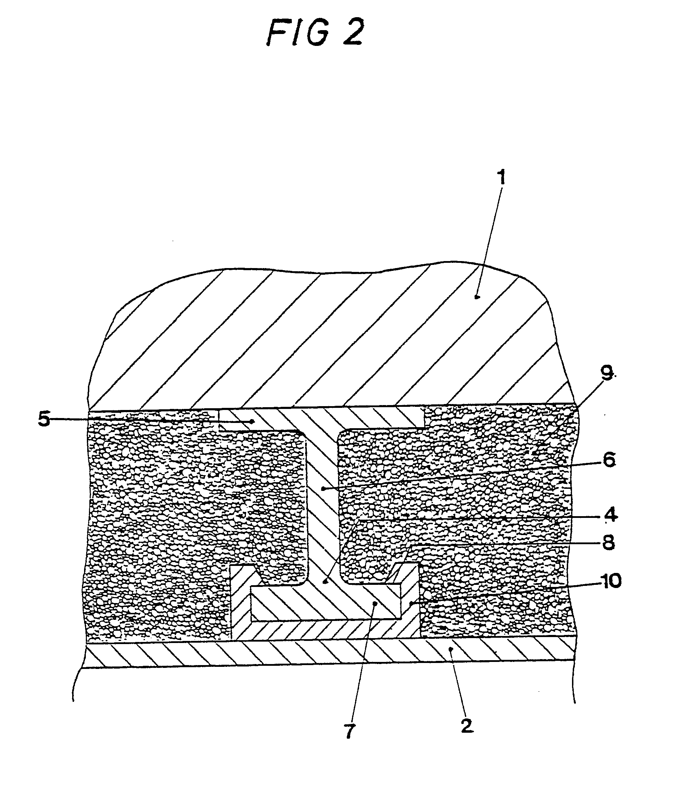

Le dispositif illustré par la figure 2 est similaire à celui de la figure 1 mis à part que les éléments d'accrochage des feuilles 2 sont constitués par des rainures 10 rapportées par soudage ou collage sur la feuille 2 et que les extrémités des âmes 6 des éléments de fixation 4 sont équipées d'un élément de liaison 7 constitué par une nervure de section en T correspondant à la forme de la rainure 10 de la feuille 2 et dans laquelle cette nervure peut être encastrée par pression et maintenue par les arêtes de blocage 8.

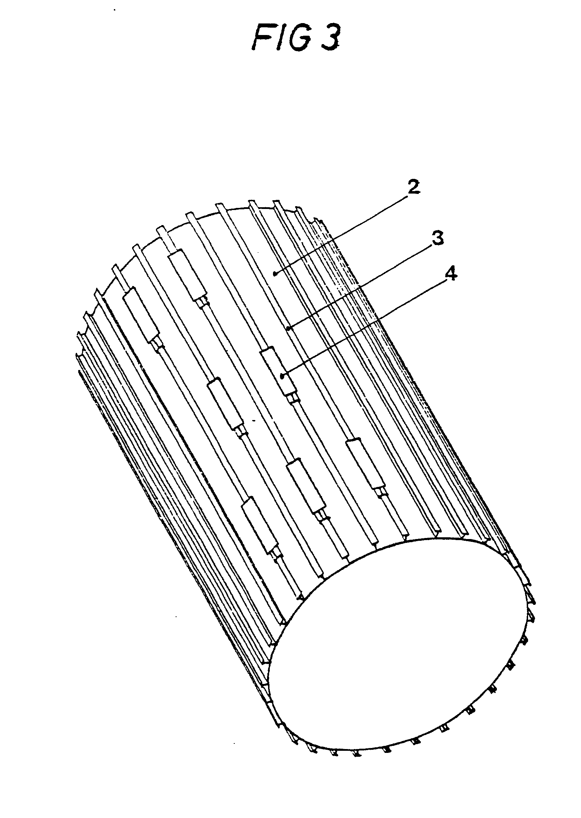

La figure 3 illustre une section tubulaire d'une dispositif convenant pour être monté dans une canalisation tubulaire en béton, non représentée, et fait apparaître que les éléments de fixation 4 peuvent être placés en des endroits et avec une fréquence quelconque sur les éléments d'accrochage 3 des feuilles de matières plastiques 2, en vue notamment d'assurer une centrage parfait du recouvrement lors de sa mise en place dans la canalisation.

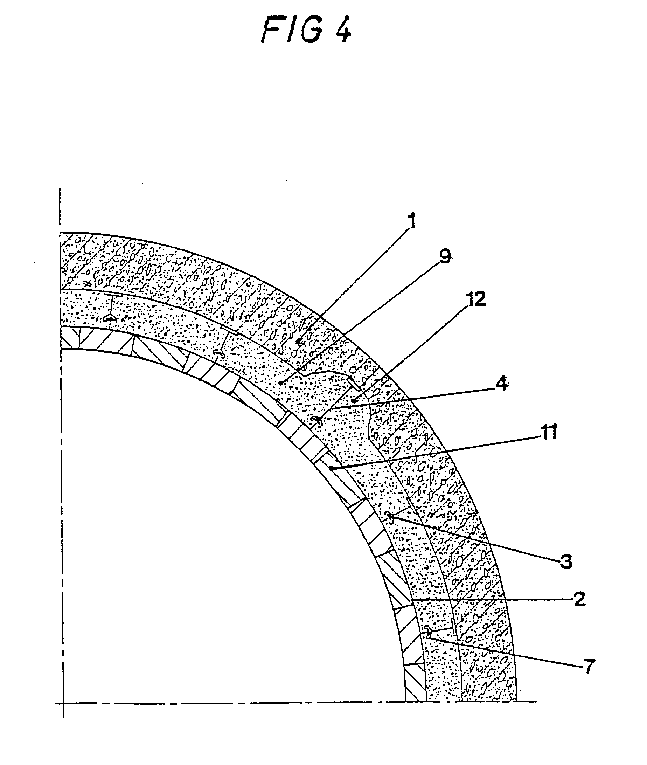

La figure 4 illustre le montage en place et l'ancrage d'un dispositif tel qu'illustré par la figure 1 dans une canalisation et béton 1 à restaurer. Ainsi qu'il apparaît sur cette figure la feuille de recouvrement cintrée 2 est maintenue en place et en forme par un coffrage interne provisoire 11. En outre, le dispositif est centré par l'intermédiaire des éléments de fixation 4 encastrés dans les éléments d'accrochage 3 de la feuille 2. Ainsi qu'il apparaît sur la figure 4, dans le cas où la paroi de la canalisation présente une corrosion locale importante 12, il est possible de conserver un excellent centrage de la feuille en choisissant un élément de fixation 4 de longueur d'âme appropriée.

Ainsi qu'il apparaît encore sur cette figure 4, la fixation définitive du dispositif est assurée par un mortier de béton 9 coulé entre la feuille 2 et la paroi de la canalisation 1. On assure ainsi à la fois la rénovation de la paroi corrodée 12 de la canalisation et l'ancrage des éléments de fixation 4, notamment par l'intermédiaire de leur semelle 5.

## Revendications

1. Dispositif pour le recouvrement de parois en béton (1) comprenant une feuille de matière plastique (2) comportant des éléments d'accrochage (3, 10) sur sa face en regard de la paroi (1) caractérisé en ce que le dispositif comprend en outre des éléments de fixation (4) en une matière rigide de forme générale en T et pouvant avoir des hauteurs différentes dont la semelle (5) est ancrée à la paroi à recouvrir par un mortier de béton (9) coulé entre la feuille et la paroi à recouvrir et dont l'âme (6) est équipée à son extrémité d'un élément de liaison (7) par encastrement coopérant avec les éléments d'accrochage (3, 10) de la feuille (2).

2. Dispositif selon la revendication 1, caractérisé en ce que les éléments d'accrochage (3) sont constitués par des nervures de section générale en forme de T et en ce que l'élément de liaison (7) est constitué par une rainure présentant un profil correspondant à celui des nervures.

3. Dispositif selon la revendication 1, caractérisé en ce que les éléments d'accrochage (10) sont constitués par des rainures de section générale en forme de T et en ce que l'élément de liaison (7) est constitué par une nervure présentant un profil correspondant à celui des rainures.

4. Dispositif selon l'une quelconque des revendications 1 à 3 caractérisé en ce que l'élément de liaison comporte des arêtes de blocage (8).

5. Dispositif selon l'une quelconque des revendications 1 à 4 caractérisé en ce que les éléments de fixation (4) sont des profilés.

6. Dispositif selon l'une quelconque des revendications 1 à 5 caractérisé en ce que les éléments de fixation (4) ont une longueur comprise entre 5 et 50 cm.

7. Dispositif selon l'une quelconque des revendications 1 à 6, caractérisé en ce que les éléments de fixation sont réalisés en polychlorure de vinyl rigide.

8. Dispositif selon l'une quelconque des revendications 1 à 7, caractérisé en ce que la feuille de matière plastique (2) est réalisée en une résine à base de polychlorure de vinyle.

## Patentansprüche

1. Vorrichtung zum Bedecken von Betonwänden (1) bestehend aus einer Kunststoffolie (2), die Verhakungselemente (3, 10) auf ihrer Seite gegenüber der Wand (1) umfaßt, dadurch gekennzeichnet, daß die Vorrichtung darüber hinaus Befestigungselemente (4) aus einem steifen Material von allgemeiner T-Form, und die unterschiedliche Höhen haben können, umfaßt, deren Fußplatte (5) an der zu bedeckenden Wand durch einen Betonmörtel (9) verankert ist, der zwischen die Folie und die zu bedeckende Wand gegossen ist und deren Steg (6) an seinem Ende mit einem Verbindungselement (7) versehen ist, das bei fester Einspannung mit den Verhakungselementen (3, 10) der Folie (2) zusammenwirkt.

2. Vorrichtung nach Anspruch 1, dadurch gekennzeichnet, daß die Verhakungselemente (3) durch Verrippungen allgemeinen Querschnitts in T-Form gebildet sind und dadurch, daß das Verbindungselement (7) durch eine Nut gebildet ist, die ein Profil präsentiert, das demjenigen der Verrippungen entspricht.

3. Vorrichtung nach Anspruch 1, dadurch gekennzeichnet, daß die Verhakungselemente (10) durch Verrippungen allgemeinen Querschnitts in T-Form gebildet sind und dadurch, daß das Verbindungselement (7) durch eine Nut gebildet ist, die ein Profil präsentiert, das demjenigen der Verrippungen enspricht.

4. Vorrichtung nach einem der Ansprüche 1 bis 3, dadurch gekennzeichnet, daß das Verbindungselement Sperrkanten (8) umfaßt.

5. Vorrichtung nach einem der Ansprüche 1 bis 4, dadurch gekennzeichnet, daß die Befestigungselemente (4) Profilstähle sind.

6. Vorrichtung nach einem der Ansprüche 1 bis 5, dadurch gekennzeichnet, daß die Befestigungselemente (4) eine Länge zwischen 5 und 50 cm aufweisen.

7. Vorrichtung nach einem der Ansprüche 1 bis 6, dadurch gekennzeichnet, daß die Befestigungselemente in Hart-Polyvinylchlorid ausgeführt sind.

8. Vorrichtung nach einem der Ansprüche 1 bis 7, dadurch gekennzeichnet, daß die Kunststoffolie (2) durch ein Harz auf der Basis von Polyvinylchlorid verwirklicht ist.

## Claims

1. Device for cladding walls made of concrete (1) comprising a sheet of plastic material (2) having coupling members (3, 10) on its side facing the wall (1), characterized in that the device additionally comprises generally T-shaped fastening members (4) made of a rigid material and capable of having different heights whose footplate (5) is anchored to the wall to be clad by a concrete mortar (9) poured between the sheet and the wall to be clad and whose web (6) is equipped at its end with a member for linking (7) by mortising, interacting with the coupling members (3, 10) of the sheet (2).

2. Device according to Claim 1, characterized in that the coupling members (3) consist of ribs whose cross-section is generally T-shaped and in that the member for linking (7) consists of a groove having a profile corresponding to that of the ribs.

3. Device according to Claim 1, characterized in that the coupling members (10) consist of grooves whose cross-section is generally T-shaped and in that the member for linking (7) consists of a rib having a profile corresponding to that of the grooves.

4. Device according to any one of Claims 1 to 3, characterized in that the linking member has locking ridges (8).

5. Device according to any one of Claims 1 to 4, characterized in that the fastening members (4) are profiles.

6. Device according to any one of Claims 1 to 5, characterized in that the fastening members (4) have a length of between 5 and 50 cm.

7. Device according to any one of Claims 1 to 6, characterized in that the fastening members are made of rigid polyvinyl chloride.

8. Device according to any one of Claims 1 to 7, characterized in that the sheet of plastic material (2) is made of a resin based on polyvinyl chloride.

0 065 799

FIG 1

0 065 799

# FIG 2

2

## FIG 3

0 065 799

# FIG 4

4